# EUROPÄISCHE PATENTANMELDUNG

(11) **EP 2 708 565 A1**
(43) Veröffentlichungstag der Anmeldung: **19.03.2014**
(21) Anmeldenummer: 12184554.9
(22) Anmeldetag: 14.09.2012
(51) Int. Cl.: C08G 18/32, C08G 18/36, C08G 18/76, C09J 175/06

(54) **Zweikomponentige Polyurethanzusammensetzungen auf Basis nachwachsender Rohstoffe, insbesondere geeignet für den Einsatz als zähelastische Klebstoffe mit einstellbarer hydrolytischer Abbaubarkeit**

(71) Anmelder: Sika Technology AG, 6340 Baar (CH)
(72) Erfinder: Kelch, Steffen, 8102 Oberengstringen (CH)
(74) Vertreter: Sika Patent Attorneys

(57) **Zusammenfassung**

Die vorliegende Erfindung betrifft eine zweikomponentige Polyurethanzusammensetzung bestehend aus einer Polyolkomponente **K1** und einer Polyisocyanatkomponente **K2;** wobei die Polyolkomponente **K1**
Ricinusöl **A1,** und
1,2,3-Propantriol **A2,** umfasst,
und wobei die Polyisocyanatkomponente **K2**
mindestens ein aromatisches Polyisocyanat **B1** umfasst,
wobei das Verhältnis der Gew.-% von (**A1/A2**) 4-50 beträgt, wobei das Verhältnis aller NCO-Gruppen der aromatischen Polyisocyanate **B1:** aller OH-Gruppen der Summe von (**A1+A2**) = 1,15 : 1 - 0.85 : 1 beträgt und wobei die Summe aller OH-Gruppen von (**A1+A2**) **≥** 93 % der Summe aller OH-Gruppen der zweikomponentigen Polyurethanzusammensetzung beträgt. Die erfindungsgemässe Klebstoffzusammensetzung zeichnet sich durch kontrollierbare hydrolytische Abbaubarkeit aus.

## Beschreibung

### Technisches Gebiet

Die Erfindung betrifft das Gebiet der zweikomponentigen Polyurethanzusammensetzungen, insbesondere der zäh-elastischen strukturellen Zweikomponenten-Polyurethanklebstoffe mit einstellbarer hydrolytischer Abbaubarkeit.

### Stand der Technik

Zweikomponentige Polyurethanklebstoffe auf Basis von Polyolen und Polyisocyanaten werden bereits seit langem eingesetzt. Zweikomponentige Polyurethanklebstoffe haben den Vorteil, dass sie nach dem Mischen schnell aushärten und deshalb bereits nach kurzer Zeit schnell höhere Kräfte aufnehmen und übertragen können. Für den Einsatz als strukturelle Klebstoffe werden jedoch hohe Ansprüche in Bezug auf Festigkeit und Dehnbarkeit an solche Klebstoffe gestellt, da derartige Klebstoffe Elemente von Last tragenden Strukturen darstellen.

Es besteht insbesondere der Wunsch nach Klebstoffen, die hohe Festigkeiten im Sinne struktureller Verklebungen und trotzdem eine hohe Dehnbarkeit aufweisen und zusätzlich hydrolytisch abbaubar, insbesondere kontrolliert hydrolytisch abbaubar, sind.

### Darstellung der Erfindung

Aufgabe der vorliegenden Erfindung ist es daher, eine zweikomponentige Polyurethanzusammensetzung, insbesondere einen strukturellen zweikomponentigen Polyurethanklebstoff, zur Verfügung zu stellen, die bei hoher Festigkeit gleichzeitig über eine hohe Dehnung verfügt und kontrolliert hydrolytisch abbaubar ist. Dies wird durch die zweikomponentige Polyurethanzusammensetzung gemäss Anspruch 1 ermöglicht.

Überraschenderweise wird mit der erfindungsgemässen zweikomponentigen Polyurethanzusammensetzung eine hohe Festigkeit des ausgehärteten Materials erreicht, ohne dabei die Elastizität einzubüssen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine zweikomponentige Polyurethanzusammensetzung bestehend aus einer Polyolkomponente **K1** und einer Polyisocyanatkomponente **K2;**
wobei die Polyolkomponente **K1**
Ricinusöl **A1,** und
1,2,3-Propantriol **A2,** umfasst,
und wobei die Polyisocyanatkomponente **K2**
mindestens ein aromatisches Polyisocyanat **B1** umfasst,
wobei das Verhältnis der Gew.-% von **(A1/A2)** 4 - 50 beträgt, wobei das Verhältnis aller NCO-Gruppen der aromatischen Polyisocyanate **B1 :** aller OH-Gruppen der Summe von (**A1+A2**) = 1,15 : 1 - 0.85 : 1 beträgt und wobei die Summe aller OH-Gruppen von (**A1+A2**) ≥ 93 % der Summe aller OH-Gruppen der zweikomponentigen Polyurethanzusammensetzung beträgt.

Unter dem Begriff "hydrolytisch abbaubar" wird im vorliegenden Dokument ein Abbau durch Hydrolyse verstanden, also eine chemische Reaktion, bei der eine Verbindung durch Einwirkung von Wasser gespalten wird, wie es beschreiben ist in CD Römpp Chemie Lexikon, Version 1.0, Thieme Verlag.

Bevorzugt ist eine hydrolytische Abbaubarkeit, welche bei einer Lagerung in demineralisiertem Wasser bei einer Temperatur von 40 °C über einen Zeitraum von 60 Tagen zu einem Gewichtsverlust der ausgehärteten Zusammensetzung von ≥ 0.8 Gew.-%, insbesondere ≥ 1Gew.-%, insbesondere bevorzugt ≥ 2 Gew.-% am meisten bevorzugt ≥ 4 Gew.-%, führt. Der Gewichtsverlust wird gemessen nach dem Trocknen der Zusammensetzung unter Vakuum bis zum Erreichen der Gewichtskonstanz, er wird angegeben in Prozent des Gewichts der ausgehärteten Zusammensetzung vor der Lagerung in demineralisiertem Wasser.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommende funktionelle Gruppe pro Molekül enthält.

Die vorliegende Polyolkomponente **K1** umfasst Ricinusöl **A1.** Das Ricinusöl kann Spuren von Wasser enthalten. Insbesondere ist der Wasseranteil im Ricinusöl ≤ 5 Gewichts-%, vorzugsweise ≤ 1 Gewichts-%, insbesondere bevorzugt ≤ 0.5 Gewichts-%.

Unter dem Begriff "Ricinusöl" (auch Rizinusöl oder Kastoröl genannt) wird im vorliegenden Dokument insbesondere Ricinusöl verstanden, wie es beschreiben ist in CD Römpp Chemie Lexikon, Version 1.0, Thieme Verlag.

Geeignete Ricinusöle sind beispielsweise auch kommerziell erhältlich unter dem Handelsnamen Alberdingk® Castor Oil Low Acid 0.7 von der Firma Alberdingk Boley, Deutschland oder unter dem Handelsnamen #1 Grade Castor Oil von der Firma Vertellus Specialities Inc, USA.

Vorzugsweise ist Ricinusöl ein natürlich nachwachsender Rohstoff und wird aus dem Samen der Rizinusstaude (Ricinus communis, Wolfsmilchgewächs) gewonnen. Das Ricinusöl kann roh oder aufgereinigt eingesetzt werden. Als besonders geeignet hat sich der Einsatz von Ricinusöl mit einem reduzierten Gehalt an freien Fettsäuren (low FFA castor oil) erwiesen. Vorzugsweise wird Ricinusöl mit einem Gehalt an freien Fettsäuren von weniger als 5 Gew.-%, insbesondere von zwischen 1 und 4 Gew.-%, verwendet. Dies ist dahingehend von Vorteil dass dadurch eine bessere Vernetzung erhalten wird.

Die Polyolkomponente **K1** umfasst 1,2,3-Propantriol (auch Glycerin genannt) **A2.** Geeignete 1,2,3-Propantriole sind beispielsweise kommerziell erhältlich von der Firma ecoMotion GmbH, Deutschland.

Die vorliegende Polyisocyanatkomponente **K2** umfasst mindestens ein aromatisches Polyisocyanat **B1.**

Geeignete aromatische Polyisocyanate **B1** sind insbesondere monomere Di- oder Triisocyanaten, sowie Oligomere, Polymere und Derivate von monomeren Di- oder Triisocyanate, sowie beliebige Mischungen davon.

Geeignete aromatische monomere Di- oder Triisocyanate sind insbesondere 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1 ,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)benzol, Tris-(4-isocyanatophenyl)methan und Tris-(4-isocyanatophonyl)thiophosphat. Bevorzugte aromatische monomere Di- oder Triisocyanate sind abgeleitet von MDI und/oder TDI.

Geeignete Oligomere, Polymere und Derivate der genannten monomeren Di- und Triisocyanate sind insbesondere abgeleitet von MDI und TDI. Davon insbesondere geeignet sind kommerziell erhältliche Typen, TDI-Oligomere wie Desmodur^{®} IL (von Bayer); weiterhin geeeignet sind bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen darstellen, bekannt unter Handelsnamen wie Desmodur^{®} CD, Desmodur^{®} PF, Desmodur^{®} PC (alle von Bayer), sowie Gemische aus MDI und MDI-Homologen (polymeres MDI oder PMDI), erhältlich unter Handelsnamen wie Desmodur^{®} VL, Desmodur^{®} VL50, Desmodur^{®} VL R10, Desmodur^{®} VL R20, Desmodur^{®} VH 20 N und Desmodur^{®} VKS 20F (alle von Bayer), Isonate^{®} M 309, Voranate^{®} M 229 und Voranate^{®} M 580 (alle von Dow) oder Lupranat^{®} M 10 R (von BASF). Die vorgenannten oligomeren Polyisocyanate stellen in der Praxis üblicherweise Gemische von Substanzen mit unterschiedlichen Oligomerisierungsgraden und/oder chemischen Strukturen dar. Vorzugsweise weisen sie eine mittlere NCO-Funktionalität von 2.1 bis 4.0 auf.

Bevorzugt sind als aromatische Polyisocyanate **B1** MDI und/oder TDI, welche ≥ 40 Gew.-% monomeres MDI und/oder monomeres TDI aufweisen, bezogen auf das Gesamtgewicht des MDI und/oder TDI

Handelt es sich bei dem Polyisocyanat **B1** um MDI, insbesondere MDI umfassend ≥ 40 Gew.-% monomeres MDI, so ist dies unter anderem dahingehend von Vorteil, dass dadurch hohe Zugfestigkeitswerte, hohe Zugscherfestigkeitswerte und hohe E-module erzielt werden können. Weiter ist die Verwendung von MDI einer schnellen hydrolytischen Abbaubarkeit zuträglich.

Handelt es sich bei dem Polyisocyanat **B1** um TDI, insbesondere TDI umfassend ≥ 40 Gew.-% monomeres TDI, so ist dies unter anderem dahingehend von Vorteil, dass dadurch hohe Bruchdehnungswerte erzielt werden können.

Das Verhältnis der Gew.-% von **(A1/A2)** beträgt 4 - 50.

Beträgt das Verhältnis der Gew.-% von **(A1/A2)** < 4, so ist das dahingehend von Nachteil, dass dadurch der E-modul so hoch ist, dass die resultierenden ausgehärteten Zusammensetzungen nicht als viskoelastische Klebstoffe geeignet sind.

Beträgt das Verhältnis der Gew.-% von (**A1/A2**) > 50, so ist das dahingehend von Nachteil, dass dadurch der E-modul so tief ist, dass die resultierenden Zusammensetzungen nicht als viskoelastische Klebstoffe geeignet sind.

Beträgt das Verhältnis der Gew.-% von **(A1/A2)** 30-4, insbesondere 20-4, insbesondere bevorzugt 13-4, am meisten bevorzugt 8-4, so ist dies dahingehend von Vorteil, dass dadurch hohe Zugfestigkeitswerte erhalten werden.

Beträgt das Verhältnis der Gew.-% von **(A1/A2)** 30-4, insbesondere 20-4, insbesondere bevorzugt 13-4, am meisten bevorzugt 8-4, so ist dies dahingehend von Vorteil, dass dadurch hohe E-module erhalten werden.

Handelt es sich bei dem aromatischen Polyisocyanat **B1** um MDI und beträgt das Verhältnis der Gew.-% von **(A1/A2)** 50-13, insbesondere 50-20, so ist dies dahingehend von Vorteil, dass dadurch hohe Bruchdehnungswerte erhalten werden.

Handelt es sich bei dem aromatischen Polyisocyanat **B1** um TDI und beträgt das Verhältnis der Gew.-% von (**A1/A2**) 30-4, insbesondere 13-4, so ist dies dahingehend von Vorteil, dass dadurch hohe Bruchdehnungswerte erhalten werden.

Beträgt das Verhältnis der Gew.-% von **(A1/A2)** 30-4, insbesondere 20-4, insbesondere bevorzugt 13-4, am meisten bevorzugt 8-4, so ist dies einer schnelleren hydrolytischen Abbaubarkeit zuträglich.

Beträgt das Verhältnis der Gew.-% von **(A1/A2)** 30-8, so ist dies einer zeitlich konstanten und somit gut einstellbaren und kontrollierbaren hydrolytischen Abbaubarkeit zuträglich.

Beträgt das Verhältnis der Gew.-% von **(A1/A2)** 8-4, so ist dies einer anfänglich erhöhten hydrolytischen Abbaubarkeit, insbesondere einer erhöhten hydrolytischen Abbaubarkeit innerhalb der ersten 15 Tage, zuträglich.

Das Verhältnis aller NCO-Gruppen der aromatischen Polyisocyanate **B1 :** allen OH-Gruppen der Summe von **(A1 +A2)** beträgt 1,15:1- 0.85 : 1. Vorzugsweise beträgt das Verhältnis aller NCO-Gruppen der aromatischen Polyisocyanate **B1 :** allen OH-Gruppen der Summe von (**A1+A2**) 1,1: 1 - 0.9 : 1. Unter dem vorgehend beschriebenen Verhältnis wird das molare Verhältnis erwähnter Gruppen verstanden.

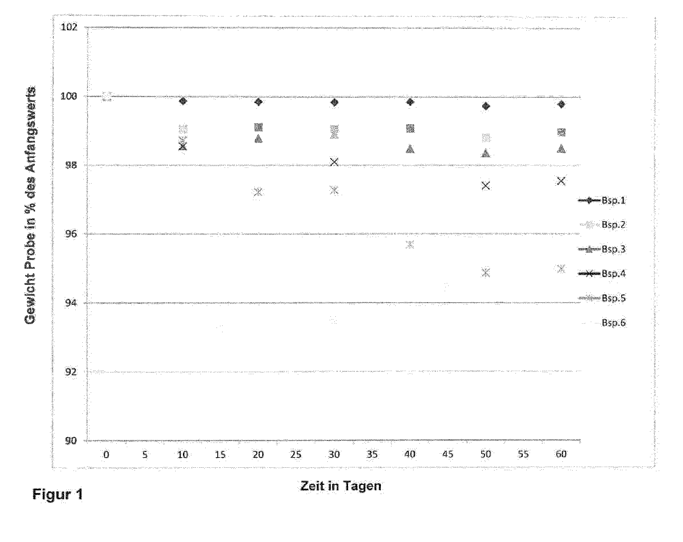

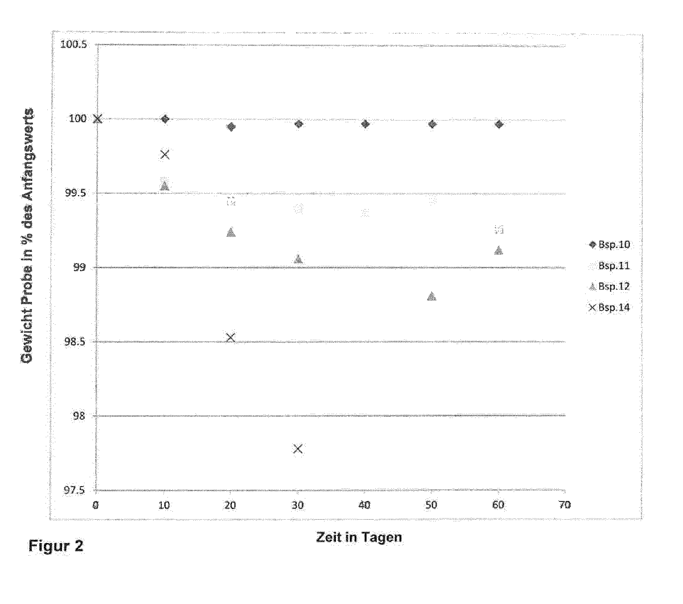

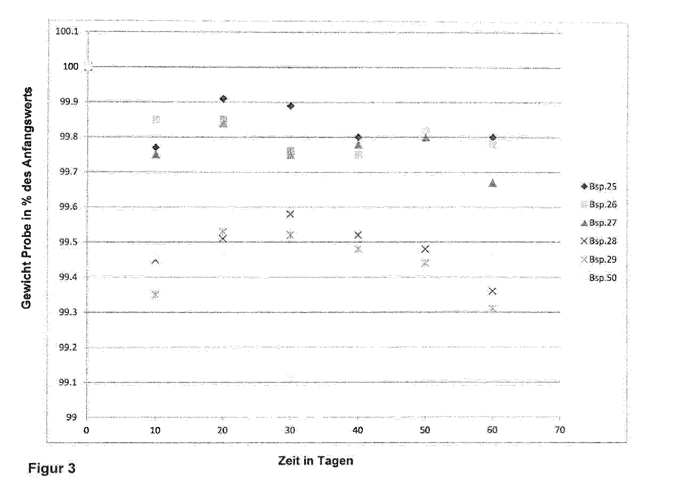

Bei der zweikomponentigen Polyurethanzusammensetzung beträgt die Summe aller OH-Gruppen von (**A1+A2**) ≥ 93 % der Summe aller OH-Gruppen der zweikomponentigen Polyurethanzusammensetzung. Weist die Polyolkomponente **K1** mehr als 7 % OH-Gruppen (die nicht von **(A1 +A2)** stammen), bezogen auf die Summe aller OH-Gruppen der zweikomponentigen Polyurethanzusammensetzung auf, so führt das zu einer ungenügenden hydrolytischen Abbaubarkeit, wie dies beispielsweise in Tabelle 6 und Figur 3 aus dem Beispiel 50 mit einem Wert von ca. 8.6 % (OH-Gruppen, die nicht von **(A1+A2)** stammen) ersichtlich ist.

Vorzugsweise beträgt bei der zweikomponentigen Polyurethanzusammensetzung die Summe aller OH-Gruppen von (**A1+A2**) ≥ 95 %, insbesondere ≥ 98 %, insbesondere bevorzugt ≥ 99 %, am meisten bevorzugt ≥ 99,5 %, der Summe aller OH-Gruppen der zweikomponentigen Polyurethanzusammensetzung. Dies ist einer besseren hydrolytischen Abbaubarkeit zuträglich.

Vorzugsweise ist die zweikomponentige Polyurethanzusammensetzung im Wesentlichen frei von OH-Gruppen, welche nicht von **(A1+A2)** herrühren. Unter dem Begriff "im Wesentlichen frei" wird in diesem Fall verstanden, dass die Summe der OH-Gruppen, welche nicht von **(A1+A2)** herrühren, ≤5 %, insbesondere ≤2 %, insbesondere bevorzugt ≤1 %, am meisten bevorzugt ≤0.5 %, beträgt, bezogen auf die Summe aller OH-Gruppen der zweikomponentigen Polyurethanzusammensetzung. Dies ist einer besseren hydrolytischen Abbaubarkeit zuträglich.

Vorzugsweise ist die zweikomponentige Polyurethanzusammensetzung im Wesentlichen frei von OH-Gruppen der folgenden Stoffe:
- Polyether- und/oder Polyesterpolyole.
- Niedermolekularen Polyolen mit einem Molekulargewicht von 120 bis 3000 g/mol (ausgenommen 1,2,3-Propantriol), insbesondere;
   - Niedermolekularen aliphatische Triole mit einem Molekulargewicht von 120 bis 2000 g/mol (ausgenommen 1,2,3-Propantriol).
      Es gibt unterschiedliche Arten von derartigen niedermolekularen aliphatischen Triolen. So können sie beispielsweise Urethan- und/oder Harnstoff- und/oder Ethergruppen enthalten. Die Gestalt der Triole kann sehr unterschiedlich sein. So sind beispielsweise sternförmige oder kammförmige Triole möglich. Es ist weiterhin möglich, dass im Triol sowohl primäre als auch sekundäre Hydroxylgruppen vorhanden sind. Beispielsweise lassen sich erwähnte niedermolekulare aliphatische Triole aus einem aliphatischen Triisocyanat, insbesondere aus einem Isocyanurat, welches aus drei Diisocyanat-Molekülen gebildet wird, im Überschuss von aliphatischen Diolen, insbesondere von Polyetherdiolen, gegebenenfalls durch weitere Nachverlängerung mittels aliphatischen Diisocyanaten und aliphatischen Diolen, erreichen. Weitere beispielhafte niedermolekulare aliphatischen Triole können aus niedermolekularen aliphatischen Triolen, wie zum Beispiel Trimethylolpropan oder Glycerin, und einem aliphatischen Diisocyanat und nachfolgender Reaktion mit einem aliphatischen Diol erhalten werden.Weiterhin beispielhafte niedermolekulare aliphatische Triole sind Produkte einer Alkoxylierungsreaktion von niedermolekularen aliphatischen Triolen, wie zum Beispiel Trimethylolpropan oder Glycerin. -niedermolekularen Diolen mit einem Molekulargewicht von 120 bis 2000 g/mol.
   - niedermolekularen Polyolen mit 5 bis 8 Hydroxylgruppen mit einem Molekulargewicht von 120 bis 3000 g/mol. Typischerweise handelt es sich bei solchen Polyolen um Zuckeralkohole sowie auf Zuckeralkohol basierende Polyole, die eine entsprechende Anzahl von OH-Gruppen aufweisen, insbesondere Pentite oder Hexite oder solche auf Basis von Disacchariden. Es können auch die entsprechenden Zucker eingesetzt werden.
   - natürlichen Ölen (ausgenommen Ricinusöl) und natürlichen Ölen, welche Umsetzungsprodukte mit Ketonharzen sind, insbesondere Umsetzungsprodukte von Rizinusöl mit Ketonharzen, insbesondere solche, wie sie beispielsweise von Bayer unter der Bezeichnung Desmophen® 1150 und von Cognis unter der Bezeichung Sovermol® 805 vertrieben werden. Als "natürliche Öle" werden in diesem Dokument bei 23 °C flüssige Ester von Fettsäuren mit Glycerin verstanden. Diese Ester sind in der Natur vorkommend. Sie können aber auch hergestellt werden durch Synthese oder durch technische sowie biotechnologische Verfahren. Der Begriff "Fettsäure" umfasst sämtliche Carbonsäuren, deren Carboxylgruppen mit gesättigten, ungesättigten, verzweigten oder unverzweigten Alkyl-Resten mit mehr als 9 C-Atomen verbunden sind.

Vorzugsweise ist die zweikomponentige Polyurethanzusammensetzung im Wesentlichen frei von aliphatischen Polyisocyanaten. Unter dem Begriff "im Wesentlichen frei" wird in diesem Fall verstanden, dass die Summe der NCO-Gruppen, welche nicht von **B1** herrühren, ≤ 5 %, insbesondere ≤ 2 %, insbesondere bevorzugt ≤ 1 %, am meisten bevorzugt ≤ 0.5 %, beträgt, bezogen auf die Summe aller NCO - Gruppen der zweikomponentigen Polyurethanzusammensetzung. Dies ist einer besseren hydrolytischen Abbaubarkeit zuträglich. Weiter ist es in den meisten Fällen unter Verwendung von aliphatischen Polyisocyanaten nicht möglich, ein ausgehärtetes Produkt herzustellen, welches als Klebstoff geeignet ist. So war es im Falle der Beispiele 15-24 und 30-34 nicht möglich, innerhalb einer Zeit von 7 Tagen ein ausgehärtetes Produkt zu erhalten und daraus Prüfkörper herzustellen.

Vorzugsweise beträgt der Anteil der Summe von Ricinusöl **A1** und 1,2,3-Propantriol **A2** ≥ 90 Gew.-%, insbesondere ≥ 95 Gew.-%, insbesondere bevorzugt ≥ 99 Gew.-%, bezogen auf das Gesamtgewicht der Polyolkomponente **K1.**

Vorzugsweise beträgt der Anteil des aromatischen Polyisocyanats **B1** ≥ 90 Gew.-%, insbesondere ≥ 95 Gew.-%, insbesondere bevorzugt ≥ 99 Gew.-%, bezogen auf das Gesamtgewicht der Polyisocyanatkomponente **K2.**

Die Komponenten **K1** und **K2** werden vorteilhaft derart formuliert, dass das Volumenverhältnis von Komponente **K1** und **K2** zwischen 1:3 und 3:1, insbesondere zwischen 1:2 und 2:1, beträgt. Besonders bevorzugt beträgt dieses Verhältnis in etwa 1:1.

Beide Komponenten **K1** und **K2** können neben den bereits erwähnten weitere Bestandteile, wie sie der Fachmann aus der -Polyurethanchemie her kennt, aufweisen. Diese können in nur einer Komponente oder in beiden vorhanden sein. Als derartige zusätzliche Bestandteile werden beispielsweise Lösungsmittel, Weichmacher und/oder Extender, Füllstoffe wie insbesondere Russ, Kreide, Talk, Baryth, Schichtsilikate, Haftvermittler wie insbesondere Trialkoxysilane, Thixotropiermittel wie amorphe Kieselsäuren, Trocknungsmittel wie Zeolithe und Farbpigmente eingesetzt.

Wie der Fachmann für Polyurethanklebstoffe weiss, muss bei der Herstellung der Komponenten, insbesondere bei der Polyisocyanatkomponente K2, darauf geachtet werden, dass deren Bestandteile möglichst frei von Wasser sind und die Komponenten unter Ausschluss von Feuchtigkeit gehandhabt werden.

Die Komponenten **K1** und **K2** werden vor der Anwendung getrennt voneinander gelagert und erst bei oder unmittelbar vor der Anwendung miteinander gemischt. Die Komponenten sind vorteilhaft in einer Verpackung, welche aus zwei voneinander getrennten Kammern besteht, vorhanden und zwar derart, dass die Polyolkomponente **K1** in der einen Kammer und die Polyisocyanatkomponente **K2** in der anderen Kammer vorhanden ist. Die Komponenten **K1** und **K2** werden in die Kammern der Verpackung eingefüllt und luft- und feuchtigkeitsdicht verschlossen.

In einem weiteren Aspekt umfasst die Erfindung eine Packung bestehend aus einer Verpackung mit zwei voneinander getrennten Kammern und einer zweikomponentigen Polyurethanzusammensetzung.

Bevorzugte derartige Packungen sind einerseits side-by-side Doppelkartuschen oder Koaxialkartuschen, bei denen zwei röhrenförmige Kammern nebeneinander oder ineinander angeordnet sind und mit Kolben luft- und feuchtigkeitsdicht verschlossen sind.

Für Anwendungen in grösseren Mengen, insbesondere für Anwendungen in der industriellen Fertigung, werden die Komponenten **K1** und **K2** vorteilhaft in Fässer oder Hobbocks abgefüllt und gelagert. In diesem Falle werden die Komponenten über Förderpumpen über Leitungen einer Mischapparatur zudosiert, wie sie üblicherweise für Zweikomponentenklebstoffe in der industriellen Fertigung eingesetzt werden.

Bei jeglicher Packung ist es wichtig, dass zumindest die Polyisocyanatkomponente **K2** luft- und feuchtigkeitsdicht verschlossen ist, so dass beide Komponenten über lange Zeit, d.h. typischerweise länger als 6 Monate, lagerfähig sind.

In einem weiteren Aspekt umfasst die Erfindung ein Verfahren zum Verkleben.

Das Verfahren der Verklebung umfasst die folgenden Schritte:
- Mischen der vorgängig beschriebenen Komponenten **K1** und **K2,**
- Applizieren der gemischten Polyurethanzusammensetzung auf mindestens eine der zu verklebenden Substratoberflächen,
- Fügen innerhalb der Offenzeit,
- Aushärten der Polyurethanzusammensetzung.

Das Mischen erfolgt typischerweise über Statikmischer oder mit Hilfe von dynamischen Mischern.

Die gemischte Polyurethanzusammensetzung wird auf mindestens einer der zu verklebenden Substratoberfläche appliziert. Das zu verklebende Substrat umfasst oder besteht vorzugsweise aus einem biologisch abbaubaren Material. Unter dem Begriff "biologisch abbaubar" wird im vorliegenden Dokument insbesondere biologischer Abbau verstanden wie er beschreiben ist in CD Römpp Chemie Lexikon, Version 1.0, Thieme Verlag.

Das zu verklebende Substrat umfasst oder besteht vorzugsweise aus einem organischen Material, vorzugsweise einem nachwachsenden organischen Material, insbesondere bevorzugt einem auf Polysacharid wie beispielsweise Stärke oder Cellulose basiertem Material oder aus nachwachsenden Rohstoffen basiertem Polyestermaterial. Vorzugsweise handelt es sich um ein Cellulosefaserflies, Papier oder Holz.

Weitere mögliche Substrate sind Metall, Kunststoff, Glas oder Keramik oder faserverstärkte Kunststoffe.

Typischerweise sind zwei Substrate vorhanden, welche verklebt werden sollen. Es ist möglich, dass der Fügepartner, d.h. das zweite Substrat identisch oder unterschiedlich vom ersten Substrat ist. Der Klebstoffauftrag kann auf dem ersten und/oder dem zweiten Fügepartner erfolgen. Nach dem Klebstoffauftrag werden die Fügepartner innerhalb der Offenzeit gefügt. Anschliessend an das Fügen erfolgt die Aushärtung der Polyurethanzusammensetzung.

Somit entsteht ein Verbund der Fügepartner, wobei der Klebstoff diese Fügepartner kraftschlüssig miteinander verbindet.

Aus dem vorgängig beschriebenen Verfahren resultiert ein verklebter Artikel, welcher insbesondere ein verklebter Artikel ist umfassend, als Substrate, biologisch abbaubares Material. Vorzugsweise bestehen die Substrate zu mehr als 80 Gew.-% aus biologisch abbaubarem Material. Ein solcher Artikel ist ein weiterer Aspekt der Erfindung.

Die Polyurethanzusammensetzung wird vorzugsweise als struktureller Klebstoff eingesetzt. In einem weiteren Aspekt umfasst die Erfindung daher die Verwendung einer zweikomponentigen Polyurethanzusammensetzung als Klebstoff, insbesondere als struktureller Klebstoff. Besonders bevorzugt ist die Verwendung als hydrolytisch abbaubarer Klebstoff, insbesondere als hydrolytisch abbaubarer struktureller Klebstoff.

Bevorzugt weist ein solcher struktureller Klebstoff im ausgehärteten Zustand bei Raumtemperatur eine Zugfestigkeit von ≥ 5 MPa, insbesondere von ≥ 6 MPa, auf. Bevorzugt weist ein struktureller Klebstoff im ausgehärteten Zustand bei Raumtemperatur eine Bruchdehnung von ≥ 30 %, insbesondere von ≥ 60 %, auf. Bevorzugt weist ein struktureller Klebstoff im ausgehärteten Zustand bei Raumtemperatur ein E-Modul von ≥ 10 MPa, auf. Dabei sind diese genannten mechanischen Werte gemessen wie in den nachfolgenden Beispielen beschrieben.

Typische Beispiele für Anwendungen der erfindungsgemässen Polyurethanzusammensetzungen finden sich in Verpackungen und Verbundwerkstoffen, insbesondere solche basierend auf organischen Materialien, am meisten bevorzugt Verpackungen und Verbundwerkstoffe (beispielsweise Sandwichpanelplatten mit Wabenkern) basierend auf biologisch abbaubaren Materialien. Hierbei ist der ausgehärtete Klebstoff ein Teil einer tragenden Struktur und bildet somit ein wichtiges Bindeglied, an dessen mechanischen Eigenschaften hohe Ansprüche gestellt werden. Die vorliegende Erfindung erfüllt diese hohen Ansprüche bestens.

Die erfindungsgemässe Polyurethanzusammensetzung zeichnet sich durch eine hydrolytische Abbaubarkeit, vorzugsweise eine kontrollierte hydrolytische Abbaubarkeit aus.

### Beispiele

Die in Tabelle 1 beispielhaft angeführten Zusammensetzungen ***2 - 6** und **11 - 14*** sind erfindungsgemässe Beispiele, während es sich bei den anderen um Referenzbeispiele handelt.

Zur Herstellung der Komponenten **K1** wurde die Komponente A1 (respektive die nicht-erfindungsgemässe Komponente A1 und, falls vorhanden, die Komponente A2 (respektive die nicht-erfindungsgemässe Komponente A2' oder A2") sowie 1 Gew.-% (bezogen auf das Gesamtgewicht der Komponente K1) eines Trocknungsmittels (PURMOLC® molecular sieve, Zeochem AG, Schweiz), gemäss dem in der in Tabelle 2 angegebenen Verhältnis A1/A2 gravimetrisch eingewogen und in einem SpeedMixer® (DAC 150 FV, Hauschild) 30 Sekunden bei 3000 rpm gemischt.

Bei dem Beispiel 50 wurde zusätzlich zur Komponente A1 noch die nicht-erfindungsgemässe Komponente A1 "im Gewichts-verhältnis A1/A1" von 75/20 zugegeben.

Danach wurde die Komponenten **K2** (B1-1, B1-2, respektive die nichterfindungsgemässen B', B", B"', B"") gemäss Tabelle 2 gravimetrisch zu der Komponenten **K1** eingewogen und in dem SpeedMixer 30 Sekunden bei 3000 rpm gemischt. Die Komponenten **K1** und **K2** wurden im Gewichtsverhältnis von **K1 : K2** so vermischt, dass jeweils ein NCO / OH-Verhältnis von 1.07 resultierke. Danach wurde die gemischte Zusammensetzung zur Aushärtung in Teflonschalen mit einem Durchmesser von 20 cm gegossen und daraus Proben mit einer Dicke von 2 mm gewonnen.

In Tabelle 2 sind die eingesetzten (und in Tabelle 1 ausgeführten) Rohstoffe durch ein "X" markiert, diese wurden wie vorgehend beschrieben zu den Beispielen 1-50 vermischt. So wurde beispielsweise zur Herstellung von Beispiel 2 65.3 g Ricinusöl, 1.36 g 1,2,3-Propantriol sowie 33.7 g MDI (inklusive 1 Gew.-% einer 1 %-igen Lösung eines Katalysators basierend auf Bismut- und Zink-neodecanoat) verwendet.

Die Beispiele 7-9 ergaben bei der Aushärtung einen spröden Schaum, aus welchem sich keine Probenkörper herstellen liessen. Im Falle der Beispiele 15-24 und 30-34 war es nicht möglich, innerhalb einer Zeit von 7 Tagen ein ausgehärtetes Produkt zu erhalten und daraus Prüfkörper herzustellen. In Tabelle 3 sind Beispiele, bei denen sich ein Probenkörper (P.k.) herstellen liess mit einem (+) gekennzeichnet. Beispiele, bei denen sich kein Probenkörper (P.k.) herstellen liess, sind mit einem (-) gekennzeichnet.

### Messungen

Die gemischten Komponenten **K1** und **K2** wurden in Hantelform gemäss ISO 527, Teil 2, 1 B gebracht und während 24 h bei 25°C und anschliessend während 3h bei 80 °C gehärtet.

Nach einer Konditionierungszeit von 24h bei 25°C wurden E-Modul 1 (Dehnungsbereich 0.5-5 %), E-Modul 2 (Dehnungsbereich 0.05-0.25 %), Zugfestigkeit (ZF) und Bruchdehnung (BD) der so hergestellten Probekörper gemäss ISO 527 auf einer Zwick Z020 Zugprüfmaschine bei einer Prüftemperatur von 23°C und einer Prüfgeschwindigkeit 200 mm/min gemessen. Die Ergebnisse finden sich in Tabelle 3.

Die gemischten Komponenten **K1** und **K2** wurden 20 min nach dem Vermischen auf mit Isopropanol entfettetem KTL-lackiertem Stahl (ZSF1), respektive auf zu Platten extrudiertem Polyestermaterial (Ecoflex, Ecoflex F BX 7011, BASF Deutschland (ZSF2) oder Ecovio, Ecovio L BX 8145, BASF Deutschland (ZSF3)), in einer Schichtdicke von 2,0 mm und auf einer überlappenden Klebefläche von 20 x 45 mm appliziert und während 7 Tagen bei 23°C und 50 % Luftfeuchtigkeit ausgehärtet. Die Zugscherfestigkeit wurde bei einer Temperatur von 23.0 °C mit einer Prüfgeschwindigkeit von 20 mm/min nach DIN EN 1465 bestimmt. Die Ergebnisse finden sich in Tabelle 3.

Der hydrolytische Abbau erfolgte an Proben mit einer Dicke von 2 mm und einem Durchmesser vom 20 mm in demineralisiertem Wasser bei 40 °C über einen Zeitraum von 60d. Die zu untersuchenden Proben wurden nach der Entnahme aus dem Wasser bei 40 °C und unter Vakuum bis zur Erreichung von Gewichtskonstanz getrocknet. Die Ergebnisse finden sich in den Tabellen 4-6. Die Werte beziehen sich auf das Gewicht der Probe in % des Anfangswerts, d.h. dem Gewicht, bevor die Probe in das demineralisierte Wasser gelegt wurde.

**Tabelle 1, eingesetzte Rohstoffe, * metallorganischer Katalysator basierend auf Bismut- und Zink-neodecanoat, 1%-ige Lösung , ** metallorganischer Katalysator basierend auf Bismut- und Zink-neodecanoat, 35%-ige Lösung.**

| | |
|---|---|
| A1 | Ricinusöl, Alberdingk® Castor Oil Low Acid 0.7 von der Firma Alberdingk Boley, Deutschland, OH-Zahl von 165 |
| A1' | Umsetzungsprodukt von Rizinusöl mit Ketonharz, Desmophen® 1150, Viverso GmbH, Deutschland, OH-Zahl von 155 |
| A1" | Novance PE 3451, Polyol basierend auf Rapsöl, OH-Zahl von 76, Novance, Frankreich |
| A2 | 1,2,3-Propantriol, ecoMotion GmbH, Deutschland, OH-Zahl von 1880 |
| A2' | 1,1,1 Trimethylolpropan (auch Trimethylolpropan oder 2-(hydroxymethyl)-2-ethylpropan-1,3-diol genannt) |
| A2" | 1,4-Butandiol |
| B1-1 | MDI (45 % monomeres MDI), 4,4'-, 2,4'-Diphenylmethandiisocyanat, Desmodur® VKS 20, Bayer Material Science, (inklusive 1 Gew.-% Katalysator*) |
| B1-2 | Monomeres TDI, 2,4- und 2,6-Toluylendiisocyanat, Aldrich, (inklusive 1 Gew.-% Katalysator*) |
| B' | HDI-Trimerisat, Desmodur N 3300, Bayer Material Science, (inklusive 1 Gew.-% Katalysator*) |
| B" | HDI- trimerisat, Desmodur N 3300, Bayer Material Science, (inklusive 1 Gew.-% Katalysator**) |
| B"' | Monomeres IPDI, Vestanat IPDI, Evonik Degussa, (inklusive 2 Gew.-% Katalysator*) |
| B"" | Monomeres IPDI, Vestanat IPDI, Evonik Degussa,(ohne Katalysator) |

**Tabelle 2, Zusammensetzungen, * es werden auch Verhältniswerte angegeben, wenn anstelle von A1 die nicht erfindungsgemässen A1' und A1", respektive anstelle von B1 die nicht erfindungsgemässen B1' und B1", verwendet wurden.**

| Beispiel | A1/A2* | A1 | A1' | A1" | A2 | A2' | A2" | B1-1 | B1-2 | B' | B" | B"' | B"" |
|---|---|---|---|---|---|---|---|---|---|---|---|---|---|
| 1 | - | X | | | | | | X | | | | | |
| 2 | 48.5 | X | | | X | | | X | | | | | |
| 3 | 23.75 | X | | | X | | | X | | | | | |
| 4 | 15.5 | X | | | X | | | X | | | | | |
| 5 | 11.38 | X | | | X | | | X | | | | | |
| 6 | 4.4 | X | | | X | | | X | | | | | |
| 7 | 2.5 | X | | X | X | | | X | | | | | |
| 8 | 1.58 | X | | | X | | | X | | | | | |
| 9 | 1.04 | X | | | X | | | X | | | | | |
| 10 | - | X | | | | | | | X | | | | |
| 11 | 48.5 | X | | | X | | | | X | | | | |
| 12 | 23.75 | X | | | X | | | | X | | | | |
| 13 | 15.5 | X | | | X | | | | X | | | | |
| 14 | 11.38 | X | | | X | | | | X | | | | |
| 15 | - | X | | | | | | | | | | X | |
| 16 | 48.5 | X | | X | X | | | | | | | X | |
| 17 | 23.75 | X | | | X | | | | | | | X | |
| 18 | 15.5 | X | | | X | | | | | | | X | |
| 19 | 11 | X | | | X | X | | | | | | X | |
| 20 | - | X | | | | | | | | X | | | |
| 21 | 48.5 | X | | | X | | | | | X | | | |
| 22 | 23.75 | X | | | X | | | | | X | | | |
| 23 | 15.5 | X | | | X | | | | | X | | | |
| 24 | 11.38 | X | | | X | | | | | X | | | |
| 25 | | X | | | | | | | | | X | | |
| 26 | 48.5 | X | | | X | | | | | | X | | |
| 27 | 23.75 | X | | | X | | | | | | X | | |
| 28 | 15.5 | X | | | X | | | | | | X | | |
| 29 | 11.38 | X | | | X | | | | | | X | | |
| 30 | - | X | | | | | | | | | | | X |
| 31 | 48.5 | X | | | X | | | | | | | | X |
| 32 | 23.75 | X | | | X | | | | | | | | X |
| 33 | 15.5 | X | | | X | | | | | | | | X |
| 34 | 11.38 | X | | | X | | | | | | | | X |
| 35 | - | | X | | | | | X | | | | | |
| 36 | 48.5 | | X | | X | | | X | | | | | |
| 37 | 23.75 | | X | | X | | | X | | | | | |
| 38 | 155 | | X | | X | | | X | | | | | |
| 39 | 11.38 | | X | | X | | | X | | | | | |
| 40 | - | X | | | | | | X | | | | | |
| 41 | 48.5 | X | | | | X | | X | | | | | |
| 42 | 23.75 | X | | | | X | | X | | | | | |
| 43 | 15.5 | X | | | | X | | X | | | | | |
| 44 | 11.38 | X | | | | X | | X | | | | | |
| 45 | - | X | | | | | | X | | | | | |
| 46 | 48.5 | X | | | | | X | X | | | | | |
| 47 | 23.75 | X | | | | | X | X | | | | | |
| 48 | 15.5 | X | | | | | X | X | | | | | |
| 49 | 11.38 | X | | | | | X | X | | | | | |
| 50 | 37 5 | X | | X | | | | X | | | | | |

**Tabelle 3, Messung mechanische Eigenschaften, P.k. =Probenkörper herstellbar (+) oder nicht herstellbar (-), n.a. = nicht gemessen**

| Beispiel | P.k. (+/-) | ZF [MPa] | BD [%] | E-modul 1 [MPa] | E-modul 2 [MPa] | ZSF1 [MPa] | ZSF2 [MPa] | ZSF3 [MPa] |
|---|---|---|---|---|---|---|---|---|
| 1 | + | 2 | 52 | 3 | 2 | 1.5 | 0.6 | 0.9 |
| 2 | + | 5 | 78 | 8 | 7 | n.a. | 0.8 | 1.3 |
| 3 | + | 10 | 74 | 44 | 74 | 5 | 0.9 | 1.5 |
| 4 | + | 10 | 60 | 87 | 126 | n.a. | 1 | 1.5 |
| 5 | + | 10 | 32 | 138 | 212 | n.a. | 1 | 1.5 |
| 6 | + | 13 | 17 | 233 | 413 | n.a. | n.a. | n.a. |
| 7-9 | - | | | | | | | |
| 10 | + | 2 | 87 | 3 | 2 | n.a. | n.a. | n.a. |
| 11 | + | 2 | 105 | 3 | 3 | n.a. | n.a: | n.a. |
| 12 | + | 5 | 131 | 6 | 6 | n.a. | n.a. | n.a. |
| 13 | + | 6 | 115 | 11 | 14 | n.a. | n.a. | n.a. |
| 14 | + | 8 | 120 | 20 | 30 | n.a. | n.a. | n.a. |
| 15-24 | - | | | | | | | |
| 25 | + | 2 | 35 | n.a. | 4 | n.a. | n.a. | n.a. |
| 26 | + | 3 | 37 | n.a. | 6 | n.a. | n.a. | n.a. |
| 27 | + | 3 | 29 | n.a. | 6 | n.a. | n.a. | n.a. |
| 28 | + | 4 | 27 | n.a. | 9 | n.a. | n.a. | n:a. |
| 29 | + | 5 | 21 | n.a. | 17 | n.a. | n.a. | n.a. |
| 30-34 | - | | | | | | | |
| 35-46 | + | n.a. | n.a. | n.a. | n.a. | n.a. | n.a. | n.a. |
| 47 | + | 5 | 87 | 9 | 12 | n.a. | n.a. | n.a. |
| 48 | + | 5 | 74 | 15 | 22 | n.a. | n.a. | n.a. |
| 49 | + | n.a. | n.a. | n.a. | n.a. | n.a. | n.a. | n.a. |
| 50 | + | 3 | 86 | 6 | 10 | n.a. | n.a. | n.a. |

**Tabelle 4, Messung Gewichtsverlust bei/unter hydrolytischem Abbau in Tagen (d)**

| Zeit (d) | Gewicht Probe in % des Anfangswerts | | | | | |
|---|---|---|---|---|---|---|
| | Bsp.1 | Bsp.2 | Bsp.3 | Bsp.4 | Bsp.5 | Bsp.6 |
| 0 | 100 | 100 | 100 | 100 | 100 | 100 |
| 10 | 99.87 | 99.05 | 98.56 | 98.55 | 98.72 | |
| 15 | | | | | | 93.33 |
| 20 | 99.85 | 99.12 | 98.79 | n.a | 97.22 | |
| 30 | 99.84 | 99.07 | 98.91 | 98.1 | 97.28 | 93.53 |
| 40 | 99.85 | 99.08 | 98.49 | n.a | 95.69 | |
| 45 | | | | | | 94.49 |
| 50 | 99.73 | 98.81 | 98.36 | 97.41 | 94.87 | |
| 60 | 99.79 | 98.97 | 98.5 | 97.55 | 94.98 | 93.44 |

**Tabelle 5, Messung Gewichtsverlust bei/unter hydrolytischem Abbau in Tagen (d)**

| Zeit (d) | Gewicht Probe in % des Anfangswerts | | | |
|---|---|---|---|---|
| | Bsp.10 | Bsp.11 | Bsp.12 | Bsp.14 |
| 0 | 100 | 100 | 100 | 100 |
| 10 | 100 | 99.58 | 99.55 | 99.76 |
| 20 | 99.95 | 99.45 | 99.24 | 98.53 |
| 30 | 99.97 | 99.4 | 99.06 | 97.78 |
| 40 | 99.97 | 99.37 | n.a | n.a |
| 50 | 99.97 | 99.46 | 98.81 | n.a |
| 60 | 99.97 | 99.26 | 99.12 | n.a |

**Tabelle 6, Messung Gewichtsverlust bei/unter hydrolytischem Abbau in Tagen (d)**

| Zeit (d) | Gewicht Probe in % des Anfangswerts | | | | | |
|---|---|---|---|---|---|---|
| | Bsp.25 | Bsp.26 | Bsp.27 | Bsp.28 | Bsp.29 | Bsp.50 |
| 0 | 100 | 100 | 100 | 100 | 100 | 100 |
| 10 | 99.77 | 99.85 | 99.75 | 99.45 | 99.35 | 99.46 |
| 20 | 99.91 | 99.85 | 99.84 | 99.51 | 99.53 | 99.47 |
| 30 | 99.89 | 99.76 | 99.75 | 99.58 | 99.52 | 99.12 |
| 40 | 99.80 | 99.75 | 99.78 | 99.52 | 99.48 | 99.36 |
| 50 | 99.82 | 99.82 | 99.80 | 99.48 | 99.44 | 99.12 |
| 60 | 99.80 | 99.78 | 99.67 | 99.36 | 99.31 | 99.47 |

Bei der Messung der hydrolytischen Abbaubarkeit wurde bei den Beispielen 35-49 folgendes gefunden:
Beispiele 35-39, keine der Messungen nach 15d, 30d, 45d oder 60d erreichte einen Wert ≤ 99.60 %.
Beispiele 40-44, keine der Messungen nach 15d, 30d, 45d oder 60d erreichte einen Wert ≤ 99.40 %.
Beispiele 45-49, keine der Messungen nach 15d, 30d, 45d oder 60d erreichte einen Wert ≤ 99.60 %.

## Patentansprüche

1. Zweikomponentige Polyurethanzusammensetzung bestehend aus einer
Polyolkomponente **K1** und einer Polyisocyanatkomponente **K2;**
wobei die Polyolkomponente **K1**
Ricinusöl **A1,** und
1,2,3-Propantriol **A2,** umfasst,
und wobei die Polyisocyanatkomponente **K2**
mindestens ein aromatisches Polyisocyanat **B1** umfasst,
wobei das Verhältnis der Gew.-% von **(A1/A2)** 4 - 50 beträgt, wobei das Verhältnis aller NCO-Gruppen der aromatischen Polyisocyanate **B1 :** aller OH-Gruppen der Summe von **(A1+A2)** = 1,15 : 1 - 0.85 : 1 beträgt und wobei die Summe aller OH-Gruppen von **(A1+A2)** ≥ 93 %, insbesondere ≥ 95 %, insbesondere bevorzugt ≥ 99 %, der Summe aller OH-Gruppen der zweikomponentigen Polyurethanzusammensetzung beträgt.

2. Zweikomponentige Polyurethanzusammensetzung gemäss Anspruch 1, **dadurch gekennzeichnet, dass** es sich bei dem aromatischen Polyisocyanat **B1** um
- MDI, welche ≥ 40 Gew.-% monomeres MDI aufweisen; und/oder
- TDI, welche ≥ 40 Gew.-% monomeres TDI aufweisen,
bezogen auf das Gesamtgewicht des MDI und/oder TDI, handelt.

3. Zweikomponentige Polyurethanzusammensetzung gemäss Anspruch 1 oder 2, **dadurch gekennzeichnet, dass** das Verhältnis der Gew.-% von **(A1/A2)** 30-4, insbesondere 20-4, insbesondere bevorzugt 13-4, am meisten bevorzugt 8-4, beträgt.

4. Zweikomponentige Polyurethanzusammensetzung gemäss einem der vorgehenden Ansprüche, **dadurch gekennzeichnet, dass** in der zweikomponentigen Polyurethanzusammensetzung die Summe der OH-Gruppen, welche nicht von **(A1+A2)** herrühren, ≤5 %, insbesondere ≤2 %, insbesondere bevorzugt ≤1 %, am meisten bevorzugt ≤0.5 %, beträgt, bezogen auf die Summe aller OH-Gruppen der zweikomponentigen Polyurethanzusammensetzung.

5. Zweikomponentige Polyurethanzusammensetzung gemäss einem der vorgehenden Ansprüche, **dadurch gekennzeichnet, dass** in der zweikomponentigen Polyurethanzusammensetzung die Summe der NCO-Gruppen, welche nicht von **B1** herrühren, ≤ 5 %, insbesondere ≤ 2 %, insbesondere bevorzugt ≤ 1 %, am meisten bevorzugt ≤ 0.5 %, beträgt, bezogen auf die Summe aller NCO -Gruppen der zweikomponentigen Polyurethanzusammensetzung.

6. Zweikomponentige Polyurethanzusammensetzung gemäss einem der vorgehenden Ansprüche, **dadurch gekennzeichnet, dass** der Anteil der Summe von Ricinusöl **A1** und 1,2,3-Propantriol **A2** ≥ 90 Gew.-%, insbesondere ≥ 95 Gew.-%, insbesondere bevorzugt ≥ 99 Gew.-%, beträgt, bezogen auf das Gesamtgewicht der Polyolkomponente **K1.**

7. Zweikomponentige Polyurethanzusammensetzung gemäss einem der vorgehenden Ansprüche, **dadurch gekennzeichnet, dass** der Anteil des aromatischen Polyisocyanats **B1** ≥ 90 Gew.-%, insbesondere ≥ 95 Gew.-%, insbesondere bevorzugt ≥ 99 Gew.-%, beträgt, bezogen auf das Gesamtgewicht der Polyisocyanatkomponente **K2.**

8. Verfahren zum Verkleben umfassend die Schritte
- Mischen der Polyolkomponente **(K1)** und der Polyisocyanatkomponente **(K2)** einer zweikomponentigen Polyurethanzusammensetzung gemäss einem der Ansprüche 1 bis 7,
- Applizieren der gemischten Polyurethanzusammensetzung auf mindestens eine der zu verklebenden Substratoberflächen,
- Fügen innerhalb der Offenzeit
- Aushärten der Polyurethanzusammensetzung.

9. Verfahren gemäss Anspruch 8, **dadurch gekennzeichnet, dass** das zu verklebende Substrat ein organisches Material, vorzugsweise ein nachwachsendes organisches Material, umfasst.

10. Verklebter Artikel, welcher nach einem Verfahren gemäss einem der Ansprüche 8 oder 9 verklebt wurde.

11. Verwendung einer zweikomponentigen Polyurethanzusammensetzung gemäss einem der Ansprüche 1 bis 7 als Klebstoff, insbesondere als struktureller Klebstoff.

12. Verwendung gemäss Anspruch 11 als hydrolytisch abbaubarer Klebstoff.
